# EUROPÄISCHE PATENTANMELDUNG

(11) **EP 2 979 851 A1**
(43) Veröffentlichungstag der Anmeldung: **03.02.2016**
(21) Anmeldenummer: 14178720.0
(22) Anmeldetag: 28.07.2014
(51) Int. Cl.: B29C 70/28, C08J 5/04

(54) **Effiziente Herstellung von Composite-Halbzeugen und -Bauteilen im Nasspressverfahren unter Einsatz von hydroxyfunktionalisierten (Meth) Acrylaten, die mittels Isocyanaten oder Uretdionen duroplastisch vernetzt werden**

(71) Anmelder: Evonik Degussa GmbH, 45128 Essen (DE)
(72) Erfinder: Reemers, Sandra, 48151 Münster (DE); Tuncay, Zuhal, 44623 Herne (DE); Kube, Michael, 45721 Haltern am See (DE); Schmidt, Friedrich Georg, 45721 Haltern am See (DE)

(57) **Zusammenfassung**

Die Erfindung betrifft ein Verfahren zur Herstellung von Composite-Halbzeugen und -Bauteilen. Zur Herstellung der Halbzeuge bzw. Bauteile mischt man (Meth)acrylatmonomere, (Meth)acrylatpolymere, mehrfach funktionalisierte (Meth)acrylate, hydroxyfunktionalisierte (Meth)acrylatmonomere und/oder hydroxyfunktionalisierte (Meth)acrylatpolymere mit Di- bzw. Polyisocyanaten oder mit Uretdion-Materialien. Diese flüssige Mischung wird nach bekannten Verfahren auf Fasermaterial, wie z.B. Carbonfasern, Glasfasern oder Polymerfasern aufgebracht und mit Hilfe einer ersten Temperaturerhöhung, eines Redoxbeschleunigers oder mittels Photoinitiierung polymerisiert.

Nach Polymerisation, z.B. bei Raumtemperatur oder bei bis zu 120 °C, entstehen Thermoplaste, die nachträglich noch verformt werden können. Die hydroxyfunktionalisierten (Meth)Acrylatbestandteile können anschließend mit den bereits im System vorhandenen Isocyanaten oder Uretdionen bei einer zweiten Temperatur, die mindestens 20 °C oberhalb der Polymerisationstemperatur in einer Presse vernetzt werden. Dabei erfolgt in dieser Presse gleichzeitig die Formgebung zum endgültigen Bauteil. Auf diese Weise können formstabile Duroplaste bzw. vernetzte Composite-Bauteile erzeugt werden.

## Beschreibung

### Gebiet der Erfindung

Die Erfindung betrifft ein Verfahren zur Herstellung von Composite-Halbzeugen und -Bauteilen. Zur Herstellung der Halbzeuge bzw. Bauteile mischt man (Meth)acrylatmonomere, (Meth)acrylatpolymere, mehrfach funktionalisierte (Meth)acrylate, hydroxyfunktionalisierte (Meth)acrylatmonomere und/oder hydroxyfunktionalisierte (Meth)acrylatpolymere mit Di- bzw. Polyisocyanaten oder mit Uretdion-Materialien. Diese flüssige Mischung wird nach bekannten Verfahren auf Fasermaterial, wie z.B. Carbonfasern, Glasfasern oder Polymerfasern aufgebracht und mit Hilfe einer ersten Temperaturerhöhung, eines Redoxbeschleunigers oder mittels Photoinitiierung eine Polymerisation gestartet.
Nach Polymerisation, z.B. bei Raumtemperatur oder bei bis zu 120 °C, entstehen Thermoplaste oder schwach vernetzte Systeme, die bei der Polymerisation oder nachträglich geformt werden können. Die hydroxyfunktionalisierten (Meth)Acrylatbestandteile können anschließend mit den bereits im System vorhandenen Isocyanaten oder Uretdionen bei einer zweiten Temperatur, die mindestens 20 °C oberhalb der Polymerisationstemperatur z.B. unter Formgebung in einer Presse vernetzt werden. Dabei erfolgt in dieser Presse gleichzeitig die Formgebung zum endgültigen Bauteil. Auf diese Weise können formstabile Duroplaste bzw. vernetzte Composite-Bauteile erzeugt werden.

Faserverstärkte Materialien in Form von Composite-Materialien werden bereits in vielen industriellen Anwendungen, z.B. mittels wet-lay-up Technologie, wegen ihrer besonderen mechanischen Eigenschaften bei gleichzeitig geringem Gewicht in vielen Anwendungsgebieten eingesetzt. Bei der industriellen Verarbeitung solcher Systeme werden insbesondere kurze Zykluszeiten und hohe Lagerstabilitäten - auch bei Raumtemperatur- benötigt. Kurze Zykluszeiten sind insbesondere in Bezug auf kurze Belegzeiten von Pressen und/oder anderen Werkzeugen wichtig, da für diese Geräte die Investitionen besonders hoch sind.

Zur Herstellung von Composite-Materialien gibt es verschiedene Verfahren. Die Verfahren sind bisher nicht Großserien-tauglich. Ein bereits relativ effizienter Prozess für die Herstellung von Composite-Bauteilen ist das Nasspressverfahren. Hier werden Fasern mit Matrix in einer Presse zu einem Bauteil in Endgeometrie verpresst. Die Imprägnierung der Fasern erfolgt hierbei oft direkt in der Presse. Dies ist von Nachteil, da sich damit die Belegzeit der Presse erhöht. Erste Ansätze die Imprägnierung außerhalb der Presse durchzuführen sind bisher umständlich, da Matrixmaterial vom imprägnierten Preform tropft, der Preform klebrig und nicht formstabil ist. Der imprägnierte Preform kann daher nicht oder nur schwer automatisiert in die Presse eingelegt werden. Teilweise werden die imprägnierten Preforms daher tiefgekühlt und eingefroren in die Presse transportiert. Dies ist kostenintensiv und umständlich.

### Stand der Technik

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt. Jedoch auch die Toxizität von Epoxy-Systemen und den dort verwendeten Härter-Komponenten ist als kritisch anzusehen. Dies gilt insbesondere für bekannte Sensibilisierungen und Allergien.

Das Nasspressverfahren auf Basis von Epoxidharzen kann in WO 2014/078219 bzw. WO 2014/078218 nachgelesen werden. Hier erfolgen die Tränkung der Fasermaterialien mit dem Harz und das Aushärten des Harzes unter gleichzeitiger Formgebung im gleichen Werkzeug. Ein solches Vorgehen hat den sehr großen Nachteil einer sehr langen Werkzeugbelegzeit. Ein weiterer Nachteil ist, dass der dabei anfallende hohe Verschnitt, an mit Matrix vernetztem Fasermaterial, verworfen bzw. entsorgt werden muss.

Prepregs und daraus hergestellte Composites auf der Basis von Epoxy-Systemen werden zum Beispiel beschrieben in WO 98/50211, EP 309 221, EP 297 674, WO 89/04335 und US 4,377,657. In WO 2006/043019 wird ein Verfahren zur Herstellung von Prepregs auf der Basis von Epoxidharz-Polyurethanpulvern beschrieben. Des Weiteren sind Prepregs auf der Basis von pulverförmigen Thermoplasten als Matrix bekannt.

In WO 99/64216 werden Prepregs und Composite sowie eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0590702 werden Pulverimprägnierungen zur Herstellung von Prepregs beschrieben, bei denen das Pulver aus einem Gemisch aus einem Thermoplasten und einem reaktiven Monomer bzw. Prepolymeren besteht. Die WO 2005/091715 beschreibt ebenfalls die Verwendung von Thermoplasten zur Herstellung von Prepregs.

Prepregs mit einer Matrix auf der Basis von 2-Komponenten-Polyurethanen (2-K-PUR) sind gleichfalls bekannt. Die Kategorie der 2-K-PUR umfasst im Wesentlichen die klassischen reaktiven Polyurethan-Harz-Systeme. Prinzipiell handelt es sich um ein System aus zwei getrennten Komponenten. Während der maßgebende Bestandteil der einen Komponente immer ein Polyisocyanat, wie z.B. polymere Methylendiphenyldiisocyanate (MDI) ist, sind dies bei der zweiten Komponente Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyaddition unter Bildung eines Netzwerkes aus Polyurethan bzw. Polyharnstoff. 2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [siehe dazu: Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil.

Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.

In DE 102009001793.3 und DE 102009001806.9 wird ein Verfahren zur Herstellung von lagerstabilen Prepregs, im Wesentlichen aufgebaut aus A) mindestens einem faserförmigen Träger und B) mindestens einer reaktiven pulverförmigen Polyurethanzusammensetzung als Matrixmaterial beschrieben.

Die Systeme können dabei auch Poly(meth)acrylate als Cobindemittel oder Polyolkomponenten aufweisen. In DE 102010029355.5 werden solche Zusammensetzungen durch ein Direktschmelzeimprägnierverfahren in das Fasermaterial verbracht. In DE 102010030234.1 durch eine Vorbehandlung mit Lösungsmitteln. Nachteil dieser Systeme ist die hohe Schmelzviskosität bzw. die Verwendung von Lösungsmitteln, die zwischenzeitlich entfernt werden müssen, bzw. auch in toxikologischer Hinsicht Nachteile mit sich bringen können.

### Aufgabe

Die Aufgabe der vorliegenden Erfindung vor dem Hintergrund des Standes der Technik war es, eine neue Technologie zur Herstellung von Composite-Halbzeugen bzw. -Bauteilen zur Verfügung zu stellen, die gegenüber dem Stand der Technik kürzere Taktzeiten bzw. kürzere Pressen- und/oder Werkzeugbelegzeiten bei der Herstellung ermöglichen.

Insbesondere sollen Zwischenstufen des Verfahrens vor der endgültigen Aushärtung über mehrere Tage oder Wochen lagerstabil sein.
Weiterhin soll ein einfacher Transport der Zwischenstufen, im Weiteren auch als Preform bezeichnet, ohne Verkleben oder Formverlust, z.B. mit einem Robotorarm, möglich sein.

Weiterhin lag der vorliegenden Erfindung die Aufgabe zugrunde, bei der Herstellung von Composites weniger Verschnitt zu erzeugen und den anfallenden Verschnitt einer Weiterverwendung zugänglich zu machen.

Insbesondere war es Aufgabe der vorliegenden Erfindung, ein beschleunigtes Verfahren zur Herstellung von Composite-Halbzeugen bzw. -Bauteilen zur Verfügung zu stellen, welches eine Imprägnierung des Fasermaterials außerhalb der Formgebungspresse, ohne dass bei der Überführung in die Presse bzw. ein Werkzeug besondere Vorkehrungen, wie z.B. ein starkes Kühlen getroffen werden müsste, ermöglicht.

Weitere, nicht explizit genannte Aufgaben können sich aus der Beschreibung, den Beispielen und den Ansprüchen ergeben.

### Lösung

Gelöst werden die Aufgaben mittels eines neuartigen Verfahrens zur Herstellung von Composite-Halbzeugen und deren Weiterverarbeitung zu Formteilen. Dieses neuartige Verfahren weist folgende Verfahrensschritte auf:
I. Herstellung einer flüssigen, reaktiven Zusammensetzung,
II. direkte Imprägnierung eines faserförmigen Trägers mit der Zusammensetzung aus I.,
III. Polymerisation von Monomerbestandteilen in der flüssigen Zusammensetzung bei einer Temperatur T₁, und eine optionale vorläufige Formgebung,
IV. endgültige Formgebung zum späteren Formteil in einer Presse und/oder in einem anderen Werkzeug und
V. gleichzeitiges Aushärten der Isocyanatkomponente in der Zusammensetzung in dieser Presse bei einer Temperatur T₂, die mindestens 20 °C höher ist als die Temperatur T₁ in Verfahrensschritt III.

Zwischen Verfahrensschritten III. und IV. kann das Halbzeug optional auch über einen längeren Zeitraum zwischengelagert werden. Weiterhin kann das Halbzeug zwischen diesen beiden Verfahrensschritten bei einer Temperatur beispielsweise zwischen 30 und 100 °C, bevorzugt zwischen 40 und 70 °C getempert werden.

Dabei besteht die flüssige, reaktive Zusammensetzung im Wesentlichen aus folgenden Komponenten:
A) Einer reaktiven Harzkomponente auf (Meth)acrylatbasis, enthaltend mindestens ein (Meth)acylatmonomer und mindestens ein Poly(meth)acrylat, wobei mindestens ein Bestandteil der Harzkomponente Hydroxygruppen aufweist.
B) Mindestens einem blockierten Di- oder Polyisocyanat und/oder mindestens einem Uretdion als Isocyanatkomponente.

Mit der beschriebenen Formulierung lassen sich in Verfahrensschritt III. trockene, lagerstabile und gegebenenfalls formstabile imprägnierte Prepregs bzw. Preforms - im Weiteren als Zwischenprodukt bezeichnet - außerhalb der Presse herstellen.
Mit der in Verfahrensschritt III. eingesetzten flüssigen Mischung erfolgt eine gute Imprägnierung des Trägermaterials außerhalb der Presse, z.B. in einer Unterform, und nicht im eigentlichen Presswerkzeug, welches in den Verfahrensschritten IV. und V. zum Einsatz kommt. Dabei kann diese Unterform gleichzeitig eine von mehreren Unterformen des Presswerkezugs, die mit dem Zwischenprodukt jeweils in die Presse gefahren werden, darstellen. Alternativ dazu kann auch eine Diaphragma-Umformtechnik hier verwendet werden.

Die Mischung wird mit oder ohne Temperaturzufuhr außerhalb der Presse zur Polymerisation gebracht. Es entsteht ein thermoplastisches Halbzeug, das trocken und nicht klebrig ist. Dieses thermoplastische Halbzeug zeigt bei Entnahme aus der Unterform eine gute Formstabilität kann automatisiert aus der Unterform entnommen werden und in die heiße Presse eingelegt werden. Dabei ist es auch möglich, mehrere Lagen dieser thermoplastischen Halbzeuge in die Presse einzulegen. Weiterhin können auch andere Schichten, z.B. aus Metall, Holz, Kunststoffen oder einem anderen Material mit in die Presse eingelegt werden. So können beispielsweise über so genannte Inserts Kabelschächte oder Verschraubungsstellen im späteren Formteil realisiert werden. An diesem Punkt des Verfahrens ist auch eine Besäumung oder Zurechtschneiden des Halbzeugs möglich.

In der Presse unter Temperatur werden die hydroxyfunktionalisierten (Poly)(Meth)acrylate mit den Isocyanaten, die bei Temperatur T₂ aus den bereits im System vorhandenen Uretdionen bzw. blockierten Isocyanaten gebildet werden, vernetzt, so dass ein formstabiles duroplastisches Bauteil entsteht.

Bevorzugt beträgt dabei das Mengenverhältnis der Harzkomponente A) zur Isocyanatkomponente B) zwischen 90 zu 10 und 40 zu 60. Ganz besonders bevorzugt liegen die Harzkomponente und die Isocyanatkomponente in einem solchen Verhältnis zueinander vor, dass auf jede Hydroxygruppe der Harzkomponente A) 0,3 bis 1,0, bevorzugt 0,4 bis 0,8, besonders bevorzugt 0,45 bis 0,65 Uretdiongruppen dies entspricht 0,6 bis 2,0, bevorzugt 0,8 bis 1,8 und besonders bevorzugt 0,9 bis 1,3 extern blockierte Isocyanatgruppen der Isocyanatomponente entfallen.
Es sei an dieser Stelle darauf hingewiesen, dass die Harzkomponente neben den erfindungsgemäß enthaltenen (Meth)acrylatmonomeren und Poly(meth)acrylaten auch weitere Bestandteile, die zur OH-Zahl beitragen, enthalten kann. Dazu zählen insbesondere die optional enthaltenen, weiter unten beschriebenen Polyole.

Dabei ist die Harzkomponente A) mindestens zusammengesetzt aus 30 Gew% bis 100 Gew% Monomeren und 0 Gew% bis 70 Gew% Präpolymeren. Der Ausdruck Monomere umfasst dabei (Meth)acrylate und mit (Meth)acrylaten copolymerisierbare Monomere, bei denen es sich in dieser Bilanz nicht um Vernetzer, d.h. z.B. di-, tri- oder oligo-(Meth)acrylate, oder um Urethan(math)acrylate handelt.

Die Harzkomponente ist insbesondere mindestens zusammengesetzt aus 0 bis 10 Gew%, bevorzugt 0 bis 3 Gew% Vernetzer, bei dem es sich hier bevorzugt um ein di-, tri- oder oligo-(Meth)acrylat handelt, 20 bis 100 Gew%, bevorzugt 30 bis 90 Gew%, besonders bevorzugt 35 bis 80 Gew% und insbesondere bevorzugt 40 bis 60 Gew% Monomeren, 0 bis 20 Gew%, bevorzugt 1 bis 10 Gew% Urethan(meth)acrylate, 0 bis 70 Gew%, bevorzugt 5 bis 40 Gew% und besonders bevorzugt 10 bis 30 Gew% eines oder mehrerer Präpolymere und 0 bis 10 Gew%, bevorzugt 0,5 bis 8 Gew% und besonders bevorzugt 1,5 bis 5 Gew% eines oder mehrerer Initiatoren. In einer besonderen Ausführungsform kann das Harz weiterhin 0 bis 50 Gew%, bevorzugt 5 Gew% bis 30 Gew% und besonders bevorzugt bis 25 Gew% einer oder mehrerer Polyole enthalten. Die genaue Auswahl dieser Polyole wird weiter unten beschrieben.

Der Vorteil dieses erfindungsgemäßen Systems liegt in der Herstellung eines verformbaren thermoplastischen Halbzeugs/Prepregs, das bei der Herstellung der Composite-Bauteile in einem weiteren Schritt duroplastisch vernetzt wird. Die Ausgangsformulierung ist flüssig und damit ohne Zugabe von Lösungsmitteln für die Imprägnierung von Fasermaterial geeignet. Die Halbzeuge sind lagerstabil bei Raumtemperatur. Die entstehenden Formteile verfügen über eine, im Vergleich zu anderen Polyurethansystemen, erhöhte Wärmeformbeständigkeit. Im Vergleich zu gängigen Epoxysystemen zeichnen sie sich durch eine höhere Flexibilität aus. Zudem können derartige Matrices lichtstabil ausgelegt werden und damit für die Herstellung von Sichtcarbonteilen ohne weitere Lackierung verwendet werden.
Weiterhin haben die erfindungsgemäß hergestellten Formteile den großen Vorteil gegenüber dem Stand der Technik, dass diese mit weniger Verschnitt hergestellt werden können, bzw. der anfallende Verschnitt wiederverwendet werden kann und größtenteils nicht entsorgt werden muss. Bei den aktuellen einstufigen Prozessen nach Stand der Technik erfolgt der Zuschnitt des Bauteils bzw. die Entgratung nach der Herstellung des Bauteils. Das abgetrennte Material, bestehend aus der vernetzten Matrix und den verwendeten Fasern kann in diesen Fällen nicht wertschöpfend weiter verwendet werden und wird z.B. der thermischen Entsorgung zugeführt. Im vorliegenden Fall kann der Zuschnitt des thermoplastischen Halbzeugs erfolgen. Der Verschnitt kann in weiteren Verfahren wie SMC, in denen Kurzschnittfasern eingesetzt werden, wiederverwendet werden.

Ein weiterer Vorteil der vorliegenden Erfindung liegt darin, dass das Verfahren ohne die Verwendung von Spannrahmen durchgeführt werden kann. Dadurch fallen bei diesem Verfahren deutlich weniger Materialüberstände, die später als Verschnitt abgetrennt werden, an.

Überraschend wurde gefunden, dass ausreichend imprägnierte, reaktive und lagerstabile Composite-Halbzeuge hergestellt werden können, indem man diese mit der oben genannten Kombination aus einem (Meth)acrylatreaktionsharz und einer Isocyanatkomponente herstellt. Man erhält so Composite-Halbzeuge mit gegenüber dem Stand der Technik zumindest gleichen aber auch verbesserten Verarbeitungseigenschaften, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß verwendbaren reaktiven Zusammensetzungen sind umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Weitere Vorteile der vorliegenden Erfindung sind, dass man bei der Formgebung z.B. günstige Unterformen oder Diaphragmen anstelle von nur aufwendig herstellbaren Presswerkzeugen einsetzen kann.
Darüber hinaus ist eine besonders gute Imprägnierung des Trägermaterials durch Verwendung einer niedrig-viskosen Zusammensetzung möglich. Weiterhin erfolgt eine Teilreaktion, in Form der Polymersisation außerhalb der Presse. Damit sind Automatisierungen des Verfahrens deutlich einfacher zu realisieren.

Weiterhin ist das Zwischenprodukt aus Verfahrensschritt III. nicht klebrig, trocken, besonders form- und lagerstabil. Damit ist eine automatisierte Übertragung dieses Zwischenprodukts in die Presse einfach durchführbar. Damit und durch die anderen Vorteile der vorliegenden Erfindung wird insbesondere die Taktzeit in der Presse deutlich verkürzt. Dies ist insbesondere möglich, weil sowohl die Imprägnierung als auch Teile der Reaktion außerhalb der Presse stattfinden.
Darüber hinaus kann die Zwischenstufe aus Verfahrensschritt III gestapelt, gesägt, nachbearbeitet und auch vor Verfahrensschritt IV. vorgeformt werden.

Zusätzlich kann in diesem Verfahrensschritt Verschnitt aus der erfindungsgemäßen Formteilherstellung eingearbeitet werden. Ein solches Vorgehen ist jedoch gegenüber der Verwendung des Verschnitts in anderen SMC-Verfahren mit kurzfaserigem Material weniger bevorzugt.

Besonders überraschend wurde dabei gefunden, dass durch das erfindungsgemäße Verfahren eine gegenüber dem Stand der Technik deutlich beschleunigte Herstellung dieser Composite-Halbzeuge möglich ist. Die Formgebung in Verfahrensschritt IV. kann an einem bereits festen und leicht zu transportierenden Zwischenprodukt erfolgen. Erst wenn die Formgebung erfolgt ist, erfolgt in Verfahrensschritt V. dann die endgültige Aushärtung zum fertigen Composite-Halbzeug. Dieses Verfahren bringt damit den zusätzlichen Vorteil mit sich, dass es sehr gut kontinuierlich automatisiert werden kann. So ist es insbesondere möglich die erste Aushärtung des Verfahrensschritts III. einerseits und die Formgebung und endgültige Aushärtung in den Verfahrensschritten IV. und V. andererseits in getrennten Vorrichtungen vorzunehmen. Dadurch lassen sich die Taktzeiten gegenüber dem Stand der Technik, mit nur einem Härtungsschritt, zusätzlich deutlich verkürzen. Weiterhin ist das Verfahren damit in einer kontinuierlich betriebenen Produktionsstraße realisierbar.

Der Begriff Composite-Halbzeuge wird im Rahmen dieser Erfindung synonym zu den Begriffen Prepreg, Preform oder Organoblech verwendet. Bei einem Prepreg handelt es sich in der Regel um eine Vorstufe für duroplastische Composite-Bauteile. Bei einem Organoblech handelt es sich normalerweise um eine entsprechende Vorstufe für thermoplastische Composite-Bauteile.

### Das Trägermaterial

Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff- und Glasfasern, können verwendet werden. Ebenso sind Hybrid-Composite-Bauteile mit Prepregs aus unterschiedlichen faserförmigen Trägern herstellbar.
Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundverstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex^{®} und Kevlar^{®} von DuPont, oder Teijinconex^{®}, Twaron^{®} und Technora^{®} von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

Das Trägermaterial wird in der Regel vor Verfahrensschritt II durch das Einlegen in die Unterform, die Presse bzw. das Werkzeug vorgeformt.

### Isocyanatkomponente

Als Isocyanatkomponente werden als erste Ausführungsform mit Blockierungsmitteln blockierte oder als zweite Ausführungsform intern blockierte Di- und Polyisocyanate eingesetzt. Bei den intern blockierten Isocyanaten handelt es sich um so genannte Uretdione.
Die erfindungsgemäß eingesetzten Di- und Polyisocyanate können aus beliebigen aromatischen, aliphatischen, cycloaliphatischen und/oder (cyclo)aliphatischen Di- und/oder Polyisocyanaten bestehen. Eine Auflistung möglicher Di- und Polyisocyanate sowie Reagenzien zu deren externen Blockierung finden sich in der deutschen Patentanmeldung DE 102010030234.1.
Bei den externen Blockierungsmittel für die Di- oder Polyisocyanate handelt es sich bevorzugt um Acetessigsäureethylester, Diisopropylamin, Methylethylketoxim, Malonsäurediethylester, ε-Caprolactam, 1,2,4-Triazol, Phenol oder substituierte Phenole und/oder 3,5-Dimethylpyrazol.

Die erfindungsgemäß verwendeten Polyisocyanate sind in einer ersten Ausführungsform extern blockiert. In Frage kommen dazu externe Blockierungsmittel, wie beispielsweise in DE 102010030234.1 zu finden sind. Bei den in dieser Ausführungsform eingesetzt Di- oder Polyisocyanate, handelt es sich bevorzugt um Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), wobei auch die Isocyanurate einsetzbar sind. Bevorzugte Blockierungsmittel sind ausgewählt aus Acetessigsäureethylester, Diisopropylamin, Methylethylketoxim, Malonsäurediethylester, ε-Caprolactam, 1,2,4-Triazol, Phenol oder substituierte Phenole und/oder 3,5-Dimethylpyrazol. Die besonders bevorzugt verwendeten Härterkomponente sind Isophorondiisocyanat- (IPDI-)Addukte, die Isocyanurat-Gruppierungen und ε-Caprolactam blockierte Isocyanatstrukturen enthalten.

Zusätzlich kann die Isocyanatkomponente 0,01 bis 5,0 Gew%, bevorzugt 0,1 bis 5,0 Gew% Katalysatoren enthalten. Bevorzugt werden als Katalysatoren metallorganische Verbindungen wie Dibutylzinndilaurat, Zinkoctoat oder Bismuthneodecanoat, und/oder tertiäre Amine, besonders bevorzugt 1,4-Diazabicylco[2.2.2.]octan verwendet. Tertiäre Amine werden insbesondere in Konzentrationen zwischen 0,001 und 1 Gew% verwendet. Diese erfindungsgemäß eingesetzten reaktiven Polyurethanzusammensetzungen können beispielsweise bei normalen Bedingungen, z.B. mit DBTL-Katalyse, ab 160 °C, üblicherweise ab ca. 180 °C ausgehärtet werden.

In einer zweiten, bevorzugten Ausführungsform liegen die Isocyanatkomponenten mit einer internen Blockierung vor. Die interne Blockierung erfolgt über eine Dimerbildung über Uretdion-Strukturen, die bei erhöhter Temperatur wieder in die ursprünglich vorhandenen IsocyanatStrukturen zurückspalten und damit die Vernetzung mit dem Binder in Gang setzen.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt.
Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Es können die oben genannten Di- und Polyisocyanate verwendet werden.

Bevorzugt sind sowohl für die Ausführungsform der extern blockierten Isocyanate als auch für die Ausführungsform der Uretdione Di- und Polyisocyanate aus beliebigen aliphatischen, cycloaliphatischen und/oder (cyclo)aliphatischen Di- und/oder Polyisocyanaten. Erfindungsgemäß werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) verwendet. Ganz besonders bevorzugt werden IPDI, HDI, TMDI und H₁₂MDI eingesetzt, wobei auch die Isocyanurate einsetzbar sind.

Ganz besonders bevorzugt wird für das Matrixmaterial IPDI und HDI verwendet. Die Umsetzung dieser Uretdiongruppen enthaltenden Polyisocyanate zu Uretdiongruppen haltigen Härtern a) beinhaltet die Reaktion der freien NCO-Gruppen mit hydroxylgruppenhaltigen Monomeren oder Polymeren.

Bevorzugte Uretdiongruppen aufweisende Härter a) haben einen freien NCO-Gehalt von weniger als 5 Gew% und einen Gehalt an Uretdiongruppen von 3 bis 60 Gew%, bevorzugt 10 bis 40 Gew% (berechnet als C₂N₂O₂, Molekulargewicht 84). Bevorzugt werden Polyester und monomere Dialkohole. Außer den Uretdiongruppen können die Härter auch Isocyanurat-, Biuret-, Allophanat-, Urethan- und/oder Harnstoff-Strukturen aufweisen.

Die Isocyanatkomponente liegt bevorzugt unterhalb von 40 °C in fester Form und oberhalb von 125 °C in flüssiger Form vor. Gegebenenfalls kann die Isocyanatkomponente weitere aus der Polyurethanchemie bekannte Hilfs- und Zusatzstoffe enthalten. In Bezug auf die Uretdion enthaltende Ausführungsform weist die Isocyanatkomponente einen freien NCO-Gehalt von kleiner 5 Gew% und einen Uretdiongehalt von 3 bis 60 Gew% auf.

Darüber hinaus kann die Isocyanatzusammensetzung dieser Ausführungsform 0,01 bis 5 Gew%, bevorzugt von 0,3 bis 2 Gew% mindestens eines Katalysators ausgewählt aus quarternären Ammoniumsalzen, bevorzugt Tetralkylammoniumsalze, und/oder quarternären Phosphoniumsalzen mit Halogenen, Hydroxiden, Alkoholaten oder organischen oder anorganischen Säureanionen als Gegenion, und optional 0,1 bis 5 Gew%, bevorzugt 0,3 bis 2 Gew% mindestens eines Co-Katalysators, ausgewählt aus entweder mindestens einem Epoxid und/oder mindestens einem Metallacetylacetonat und/oder quarternären Ammoniumacetylacetonat und/oder quarternären Phosphoniumacetylacetonat enthalten. Alle Mengenangaben zu den (Co-) Katalysatoren sind bezogen auf die Gesamtformulierung des Matrixmaterials. Beispiele für Metallacetylacetonate sind Zinkacetylacetonat, Lithiumacetylacetonat und Zinnacetylacetonat, allein oder in Mischungen. Bevorzugt wird Zinkacetylacetonat eingesetzt.
Beispiele für quarternäre Ammoniumacetylacetonate oder quarternäre Phosphoniumacetylacetonate finden sich in DE 102010030234.1. Besonders bevorzugt werden Tetraethylammoniumacetylacetonat und Tetrabutylammoniumacetylacetonat eingesetzt. Selbstverständlich können auch Mischungen solcher Katalysatoren verwendet werden.

Beispiele für die Katalysatoren finden sich in DE 102010030234.1. Diese Katalysatoren können allein oder in Mischungen zugesetzt werden. Bevorzugt werden Tetraethylammoniumbenzoat und Tetrabutylammoniumhydroxid verwendet.

Als epoxidhaltige Co-Katalysatoren kommen dabei z.B. Glycidylether und Glycidylester, aliphatische Epoxide, Diglycidylether auf Basis Bisphenol A und Glycidylmethacrylate in Frage. Beispiele für solche Epoxide sind Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen eingesetzt werden. Bevorzugt werden ARALDIT PT 910 und 912 eingesetzt.

Je nach Zusammensetzung der verwendeten reaktiven oder hochreaktiven Isocyanatkomponente und gegebenenfalls zugesetzten Katalysatoren können sowohl die Geschwindigkeit der Vernetzungsreaktion bei der Herstellung der Composite-Bauteile als auch die Eigenschaften der Matrix in weiten Bereichen variiert werden.

### Harzkomponenten

Erfindungsgemäß werden als Harzkomponenten Reaktionsharze auf Methacrylatbasis verwendet. Die Schreibweise (Meth)acrylate umfasst dabei sowohl Methacrylate als auch Acrylate, sowie Mischungen aus Methacrylaten als auch Acrylate. Dabei können sowohl die Monomere wie auch die Präpolymere bezogen auf die jeweilige Komponente bis zu 25 Gew% eines mit (Meth)acrylaten copolymerisierbaren, bzw. copolymerisierten Monomers enthalten. Beispiele für solches Monomer sind insbesondere Styrol oder 1-Alkene.

Zusätzlich können noch weitere Komponenten optional enthalten sein. Als Hilfs-und Zusatzstoffe können zusätzlich Regler, Weichmacher, Stabilisatoren und/oder Inhibitoren eingesetzt werden. Darüber hinaus können Farbstoffe, Füllstoffe, Netz-, Dispergier-, Trenn- und Verlaufshilfsmittel, Haftvermittler, UV-Stabilisatoren, Entschäumer und Rheologieadditive zugesetzt werden.

Entscheidend für die vorliegende Erfindung ist, dass zumindest ein Teil der Monomere und/oder Präpolymere aus der Harzkomponente Hydroxylgruppen als funktionelle Gruppen aufweisen. Solche Hydroxyguppen reagieren mit den freien Isocyanatgruppen, bzw. Uretdiongruppen aus der Isocyanatkomponente unter Addition. Mit dieser Reaktion wird das Composite-Halbzeug in Verfahrensschritt V. endgültig ausgehärtet. Die Harzkomponente weist dabei eine OH-Zahl von 10 bis 600, bevorzugt von 20 bis 400 mg, besonders bevorzugt von 40 bis 200 mg KOH/Gramm auf. Dabei beziehen sich die breiteren Grenzen insbesondere, jedoch nicht einschränkend, auf die weiter unten genauer erläuterte Ausführungsform, bei der die Harzkomponente zusätzlich zu den Monomeren und den optionalen Präpolymeren weitere Polyole enthält. In der Ausführungsform nach der ein reines (Meth)acrylatharz ohne Polyole verwendet wird, liegt die OH-Zahl bevorzugt zwischen 10 und 200 mg KOH / g.

Insbesondere wird die Menge an den funktionellen Gruppen so gewählt, dass auf jede Hydroxygruppe der Harzkomponenten 0,6 bis 2,0 Isocyanatäquivalente bzw. 0,3 bis 1,0, bevorzugt 0,4 bis 0,8 und besonders bevorzugt 0,45 bis 0,65 Uretdiongruppen der Isocyanatkomponente entfallen. Dies entspricht 0,6 bis 2,0, bevorzugt 0,8 bis 1,6 und besonders bevorzugt 0,9 bis 1,3 extern blockierte Isocyanatgruppen der Isocyanatkomponente.

Bei den in dem Reaktionsharz enthaltenden Monomeren handelt es sich bevorzugt um Verbindungen, die ausgewählt sind aus der Gruppe der (Meth)acrylate wie beispielsweise Alkyl(meth)acrylate, welche erhalten wurden durch Veresterung mit gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat oder 2-Ethylhexyl(meth)acrylat.

Als Bestandteile von Monomergemischen eignen sich auch zusätzliche Monomere mit einer weiteren funktionellen Gruppe, wie a,ß-ungesättigte Mono-oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Ein optionaler Bestandteil des erfindungsgemäßen Reaktionsharzes sind die Vernetzer. Dabei handelt es sich insbesondere um mehrfunktionelle Methacrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat oder Trimethylolpropantri(meth)acrylat.
Eine geringfügige Vernetzung in Verfahrensschritt III. stört dabei die Formgebung in Verfahrensschritt IV. nicht oder nur kaum. Dafür tragen diese Vernetzer, in kleinen Mengen enthalten, dazu bei, die Zwischenstufe aus Verfahrensschritt III. zusätzlich zu stabilisieren. Dabei darf der Vernetzeranteil jedoch höchstens 10 Gew%, bevorzugt höchstens 5 Gew% der Komponente A) ausmachen.

Im Einzelnen wird die Zusammensetzung der Monomere nach Anteil und Zusammensetzung zweckmäßigerweise im Hinblick auf die gewünschte technische Funktion und das zu benetzende Trägermaterial gewählt werden.

Die Harzkomponente enthält neben den aufgeführten Monomeren auch Polymere, zur besseren Unterscheidbarkeit im Rahmen dieses Schutzrechtes als Präpolymer bezeichnet. Dabei handelt es sich zu mindestens 80 Gew% des Polymeranteils um Poly(meth)acrylate. Zusätzlich können in bis zu 20 Gew% auch weitere Präpolymere, insbesondere Polyester oder Polyether enthalten sind. Bevorzugt bestehen die Präpolymere jedoch ausschließlich aus Poly(meth)acrylaten.

Diese Präpolymere werden zur Verbesserung der Polymerisationseigenschaften, der mechanischen Eigenschaften, der Haftung zum Trägermaterial, der Viskositätseinstellung bei der Verarbeitung in

Verfahrensschritten II. und III., sowie der optischen Anforderungen an die Harze eingesetzt. Die Poly(meth)acrylate können ausschließlich oder zusätzlich zu den Monomeren die Hydroxyfunktionalitäten aufweisen. Es ist jedoch auch möglich, dass die Präpolymere keine funktionelle Gruppen oder zumindest keine Hydroxygruppen aufweisen, und dass die funktionellen Gruppen ausschließlich von den Monomeren der Komponente A) aufgewiesen werden. Weiterhin können die Präpolymere zusätzliche funktionelle Gruppen zur Haftvermittlung aufweisen.

Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.

Als Regler in der Polymerisation zum Präpolymer als auch als zusätzlicher Bestandteil in Komponente A) können alle aus der radikalischen Polymerisation bekannten Verbindungen verwendet werden. Bevorzugt werden Mercaptane wie n-Dodecylmercaptan eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.
Aus der Gruppe der Stabilisatoren bzw. Inhibitoren werden vorzugsweise substituierte Phenole, Hydrochinonderivate, Phosphine und Phosphite eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10 - 700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

### Optionale OH-funktionelle Cobindemittel

Optional kann die Harzzusammensetzung zusätzlich zu den Reaktionsharzen auf Methacrylatbasis Polyole als OH-funktionelle Cobindemittel enthalten, die mit den Isocyanatkomponenten gleichfalls eine Vernetzungsreaktion eingehen. Durch Zusatz dieser Polyole, die in Verfahrensschritt III nicht reaktiv sind, kann die Rheologie und damit die Verarbeitung der Halbzeuge aus Verfahrensschritt III, sowie der Endprodukte genauer eingestellt werden. So wirken die Polyole beispielsweise im Halbzeug aus Verfahrensschritt III als Weichmacher bzw. genauer als Reaktivverdünner. Die Polyole können dergestalt zugesetzt werden, dass bis zu 80 %, bevorzugt bis zu 50 % der OH-Funktionalitäten des Reaktionsharzes durch diese ersetzt werden. In Bezug auf die Menge können die Polyole bis zu 50 Gew%, bevorzugt maximal 30 Gew% und besonders bevorzugt maximal 25 Gew% der Harzzusammensetzung ausmachen.
Als OH-funktionelle Cobindemittel eignen sich grundsätzlich alle in der PU-Chemie üblicherweise eingesetzten Polyole, solange deren OH-Funktionalität mindestens zwei, bevorzugt zwischen drei und sechs beträgt, wobei Diole (difunktionelle Polyole) nur in Mischungen mit Polyolen, die mehr als zwei OH-Funktionalitäten aufweisen, eingesetzt werden. Unter der Funktionalität einer Polyolverbindungen versteht man die Anzahl der zur Reaktion befähigten OH-Gruppen des Moleküls. Für den Verwendungszweck ist es notwendig, Polyolverbindungen einzusetzen, die eine OH-Funktionalität von mindestens 3 aufweisen, um bei der Reaktion mit den Isocyanatgruppen der Uretdione ein dreidimensionales dichtes Polymernetzwerk aufzubauen. Selbstverständlich können dabei auch Mischungen verschiedener Polyole eingesetzt werden.

Ein einfaches geeignetes Polyol ist z.B. Glycerin. Andere niedermolekulare Polyole werden beispielsweise von der Firma Perstorp^{®} unter den Produktnamen Polyol^{®}, Polyol^{®} R oder Capa^{®}, von der Firma Dow Chemicals unter den Produktnamen Voranol^{®} RA, Voranol^{®} RN, Voranol^{®} RH oder Voranol^{®} CP, von der Firma BASF unter dem Namen Lupranol^{®} und von der Firma DuPont unter dem Namen Terathane^{®} vertrieben. Spezifische Produkte unter Angabe der Hydroxylzahlen und der Molmassen können beispielsweise in der deutschen Patentanmeldung mit dem Prioritätsaktenzeichen 102014208415.6 nachgelesen werden.

Alternativ zu den genannten niedermolekularen Polyolen können auch oligomere Polyole zum Einsatz kommen. Hierbei handelt es sich beispielsweise um an sich bekannte lineare oder verzweigte hydroxylgruppenhaltige Polyester, Polycarbonate, Polycaprolactone, Polyether, Polythioether, Polyesteramide, Polyurethane oder Polyacetale, bevorzugt um Polyester oder Polyether. Diese Oligomere weisen vorzugsweise ein zahlenmittleres Molekulargewicht von 134 bis 4000 auf. Besonders bevorzugt sind lineare hydroxylgruppenhaltige Polyester - Polyesterpolyole - oder Gemische solcher Polyester. Sie werden z.B. durch Umsetzung von Diolen mit unterschüssigen Mengen an Dicarbonsäuren, entsprechenden Dicarbonsäureanhydriden, entsprechenden Dicarbonsäureestern von niederen Alkoholen, Lactonen oder Hydroxycarbonsäuren hergestellt. Beispiele für geeignete Bausteine solcher Polyester finden sich gleichfalls in der deutschen Patentanmeldung mit dem Prioritätsaktenzeichen 102014208415.6.

Besonders bevorzugt werden Polyester als als oligomere Polyole eingesetzt, deren OH-Zahl zwischen 25 und 800, bevorzugt zwischen 40 und 400 liegt, deren Säurezahl höchstens 2 mg KOH / g beträgt und deren molare Masse zwischen 200 und 4000 g/mol, bevorzugt zwischen 300 und 800 g/mol liegt. Die OH-Zahl wird analog DIN 53 240-2 bestimmt; die Säurezahl analog DIN EN ISO 2114. Die molare Masse berechnet aus Hydroxyl- und Carboxyl-Endgruppen.

Genauso bevorzugt werden Polyether als oligomere Polyole eingesetzt. Diese weisen insbesondere eine OH-Zahl zwischen 25 und 1200, bevorzugt zwischen 250 und 1000 und eine molare Masse M_{w} zwischen 100 und 2000 g/mol, bevorzugt zwischen 150 und 800 g/mol auf. Ein Beispiel für einen besonders geeigneten Polyether ist Lupranol^{®} 3504/1 der BASF Polyurethanes GmbH. Die Molmasse Mₙ wird hier mittels Gelpermeationschromatographie gegen einen PMMA-Standart gemessen.

Als ganz besonders bevorzugtes Beispiel werden Polycaprolactone als oligomere Polyole eingesetzt, deren OH-Zahl zwischen 540 und 25, deren Säurezahl zwischen 0,5 und 1 mg KOH / g beträgt und deren molare Masse zwischen 240 und 10000 g/mol liegt. Geeignete Polycaprolactone sind Capa 3022,Capa 3031,Capa 3041,Capa 3050,Capa 3091,Capa 3201,Capa 3301 Capa 4101 ,Capa 4801 Capa 6100,Capa 6200,Capa 6250, alle von Perstorp, Schweden. Selbstverständlich können auch Mischungen der Polycaprolactone, Polyester, Polyether und Polyole verwendet werden.

### Die Polymerisation in Verfahrensschritt III

Die Polymerisation in Verfahrensschritt III. erfolgt bei einer Temperatur T₁, bei der die Polymerisation der (Meth)acrylate erfolgt, die Isocyanatkomponenten mit den Hydroxygruppen jedoch nicht reagieren. Dazu wird ein entsprechender Initiator benötigt. Bevorzugt handelt es sich bei diesen Initiatoren um thermisch aktivierbare Initiatoren, um Photoinitiatoren oder um radikalbildende Redoxsysteme, bevorzugt handelt es sich bei den Initiatoren um Peroxide oder Redoxsysteme.

Beispiele für Photoinitatoren sind Hydroxyketone und/oder Bisacylphosphine. Geeignete thermisch aktivierbare Initiatoren sind vor allem Peroxide, Azoinitiatoren oder Redoxsysteme. Insbesondere Peroxide sind dabei geeignet. Die Auswahl des Initiators ergibt sich dabei für den Fachmann aus dessen Halbwertszeit und der für Verfahrensschritt III. eingesetzte Temperatur T₁. In einer besonderen Variante werden die thermisch aktivierbaren Initiatoren mit einem Beschleuniger kombiniert. Solche Systeme sind nicht nur schneller, sondern auch bei geringeren Temperaturen aktivierbar. Geeignete Initiatoren und insbesondere Kombinationen aus Initiatoren und Beschleunigern können beispielsweise in EP 2 454 331 nachgelesen werden. Die Kombination der Initiatoren mit den Beschleunigern ist dort als Redox-Starter-System bezeichnet.

Die Summe der Initiatoren in Komponente A), wobei die Summe der Komponente A) die Summe der beiden zur Komponente A) gemischten Einzelkompoponenten umfasst, liegt in einer Konzentration zwischen 0 und 10 Gew%, bevorzugt zwischen 0,2 und 8,0 Gew%, besonders bevorzugt zwischen 0,5 und 6,0 Gew% und insbesondere bevorzugt zwischen 1,5 und 5,0 Gew%. Dabei ist diese Konzentration auf den reinen Initiator bezogen. Es ist durchaus möglich oder sogar üblich, dass der Initiator in einem Lösungsmittel oder einem Phlegmatisierungsmittel zugegeben werden. Diese in kleinen Mengen zugegebenen Substanzmengen werden im Weiteren weder bei der Stoffbilanz des Harzes noch der Stoffbilanz der Zusammensetzung berücksichtigt. Lösungsmittel verdampfen in der Regel während der weiteren Verarbeitung. Phlegmatisierungsmittel wie Leinöl oder Wachse liegen in nur sehr vernachlässigbarer Konzentration vor und haben im Endprodukt maximal eine leichte weichmachende Wirkung.

Verfahrensschritt III, die Aushärtung der Harzkomponente, erfolgt bevorzugt direkt nach Verfahrensschritt II. Das Aushärten erfolgt in Verfahrensschritt durch eine thermisch initiierte Polymerisation der Monomere in der Harzkomponente A). Dabei ist darauf zu achten, dass die Temperatur T₁ unterhalb der für Verfahrensschritt V benötigten endgültigen Aushärtetemperatur T₂ liegt. Bevorzugt liegt die Temperatur T₁ in Verfahrensschritt III. zwischen 20 und 120 °C, besonders bevorzugt unter 100 °C. T₁ ist dabei die Temperatur der Unterform bzw. des Werkzeugs, in dem Verfahrensschritt III. gestartet bzw. ausgehärtet wird. Dabei kann die Temperatur aufgrund der Exothermie der Polymerisation durchaus in einem gewissen Grad steigen. Bevorzugt sollte die Formulierung dabei so eingestellt sein, dass die Temperatur während der Polymerisation durchgehend mindestens 20 °C unterhalb der Temperatur T₂ bleibt.

Die erfindungsgemäß eingesetzten Polymerzusammensetzungen bieten einen sehr guten Verlauf bei geringer Viskosität und damit eine gute Imprägnierfähigkeit und im ausgehärteten Zustand eine ausgezeichnete Chemikalienbeständigkeit. Bei Verwendung von aliphatischen Vernetzern, wie z.B. IPDI oder H₁₂MDI, und durch die erfindungsgemäße Verwendung der funktionalisierten Poly(meth)acrylate wird zusätzlich noch eine gute Witterungsbeständigkeit erreicht.

Die erfindungsgemäß hergestellten Zwischenstufen aus Verfahrensschritt III. sind weiterhin bei Raumtemperatur-Bedingungen sehr lagerstabil, in der Regel mehrere Wochen und sogar Monate. Sie können somit jederzeit zu Composite-Halbzeugen bzw. -Bauteilen weiterverarbeitet werden. Dies ist der wesentliche Unterschied zu den Systemen nach Stand der Technik, die reaktiv und nicht lagerstabil sind, da diese nach dem Aufbringen sofort beginnen z.B. zu Polyurethanen zu reagieren und somit zu vernetzen.

Danach können die lagerfähigen Composite-Halbzeuge zu einem späteren Zeitpunkt zu Composite-Bauteilen weiterverarbeitet werden. Durch Verwendung der erfindungsgemäßen Composite-Halbzeuge erfolgt eine sehr gute Imprägnierung des faserförmigen Trägers, dadurch bedingt, dass die flüssigen Harzkomponenten, enthaltend die Isocyanatkomponente, die Faser des Trägers sehr gut benetzen, wobei die zu einer beginnenden zweite Vernetzungsreaktion führen könnende thermische Belastung der Polymerzusammensetzung durch eine vorherige Homogenisierung der Polymerzusammensetzung vermieden wird, des Weiteren fallen die Prozessschritte der Vermahlung und Siebung in einzelne Partikelgrößenfraktionen weg, sodass eine höhere Ausbeute an imprägniertem faserförmigen Träger erzielt werden kann.

Ein weiterer großer Vorteil der erfindungsgemäß hergestellten Composite-Halbzeuge ist, dass die hohen Temperaturen, wie sie beim Schmelzimprägnierverfahren oder bei der Ansinterung von pulverförmigen reaktiven Polyurethanzusammensetzungen zumindest kurzzeitig vonnöten sind, bei diesem erfindungsgemäßen Verfahren nicht zwingend erforderlich sind.

### Besondere Aspekte des erfindungsgemäßen Verfahrens

Verfahrensschritt II, die Imprägnierung, erfolgt durch Tränkung der Fasern, Gewebe oder Gelege mit der in Verfahrensschritt I hergestellten reaktiven Zusammensetzung. Bevorzugt erfolgt die Imprägnierung bei einer Temperatur von maximal 60 °C, besonders bevorzugt bei Raumtemperatur.

In Verfahrensschritt III kann bereits parallel eine erste Formgebung erfolgen. So ist es möglich, dass z.B. bei sehr detaillierten und gleichzeitig gekrümmten Formen des Endproduktes das Halbzeug vor dem Einlegen in die Presse bzw. ein anderes Werkzeug in Verfahrensschritt IV bereits an die komplizierte Form dieses Werkzeugs grob angepasst ist, und dass somit eine bessere Produktqualität, z.B. in Bezug auf eine hohe Formtreue, erzielt wird. Bei einfacheren Formen des Endproduktes ist es dagegen bevorzugt, dass die Formgebung ausschließlich in Verfahrensschritt IV erfolgt. Weiterhin ist es möglich, insbesondere, wenn die Halbzeuge aus Verfahrensschritt III zwischengelagert werden, dass in einem Zwischenschritt zwischen den Verfahrensschritten III und IV ein Vorheizen und ein Vorformen des Halbzeugs erfolgen. Die Temperatur in diesem Zwischenschritt sollte dabei naturgemäß unterhalb der Aushärtetemperatur des Verfahrensschritts V liegen.

Zur beschleunigten Automatisierung des Verfahrens ist es darüber hinaus auch möglich, mehrere Unterschalen zu verwenden, die nacheinander in das gleiche Werkzeug, bzw. die gleiche Presse gefahren werden. So können parallel zu Verfahrensschritt IV bereits andere Unterschalen gleichzeitig belegt werden und optional ein Vorheizen und/oder ein Vorformen in dieser Unterschale erfolgen. In einer besonderen Ausführungsform der Erfindung können zusätzlich das Imprägnieren des Verfahrensschritts II und die Polymerisation des Verfahrensschritts III, sowie eine optionale vorläufige Formgebung bereits in einer solchen Unterschale erfolgen. Alternativ kann auch ein Diaphragma verwendet werden.

Die erfindungsgemäß hergestellten Composite-Halbzeuge / Prepregs weisen sowohl nach Verfahrensschritt III. als auch nach Verfahrensschritt V. eine sehr hohe Lagerstabilität bei Raumtemperatur auf. Diese beträgt je nach enthaltener reaktiver Polyurethanzusammensetzung mindestens einige Tage bei Raumtemperatur. In der Regel sind die Composite-Halbzeuge mehrere Wochen bei 40 °C und darunter, sowie bei Raumtemperatur auch mehrere Jahre lagerstabil. Die so hergestellten Prepregs sind nicht klebrig und daher sehr gut zu handhaben und weiter zu verarbeiten. Die erfindungsgemäß eingesetzten reaktiven oder hochreaktiven Polyurethanzusammensetzungen weisen demnach eine sehr gute Haftung und Verteilung auf dem faserförmigen Träger auf.

Vor Verfahrensschritt IV können die Zwischenstufen aus Verfahrensschritt III. je nach Bedarf zu unterschiedlichen Formen kombiniert und zugeschnitten werden. Insbesondere werden zur Konsolidierung mehrerer Composite-Halbzeuge zu einem einzigen Composite und vor endgültiger Vernetzung des Matrixmaterials zur Matrix zugeschnitten, gegebenenfalls vernäht oder anderweitig fixiert. Material, welches beim Zuschneiden als Verschnitt anfällt, kann - wie oben beschrieben - für weitere Verfahren verwendet werden.

In Verfahrensschritt V erfolgt die endgültige Aushärtung der Composite-Halbzeuge zu Formteilen, die duroplastisch vernetzt sind. Dies erfolgt durch eine thermische Aushärtung der Hydroxygruppen der Harzkomponente 1 mit der Isocyanatkomponente. Im Rahmen dieser Erfindung erfolgt dieser Vorgang der Herstellung der Composite-Halbzeuge aus den Vorstufen des Verfahrensschritts III. je nach Aushärtungszeit bevorzugt bei Temperaturen zwischen 100 und 200 °C, bevorzugt oberhalb von 160 °C bei Einsatz von reaktiven Matrixmaterialien (Variante I), oder bei mit entsprechenden Katalysatoren versehenen hochreaktiven Matrixmaterialien (Variante II) bei Temperaturen von über 100 °C. Insbesondere wird die Aushärtung bei einer Temperatur zwischen 100 und 200 °C, besonders bevorzugt bei einer Temperatur zwischen 120 und 200 °C und insbesondere bevorzugt zwischen 140 und 200 °C durchgeführt. Die Zeit zur Aushärtung der erfindungsgemäß eingesetzten Polyurethanzusammensetzung liegt innerhalb von 1 bis 60 Minuten, bevorzugt zwischen 1 und 5 Minuten je nach Bauteilkomplexizität.

Die erfindungsgemäß eingesetzten reaktiven Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z.B. IPDI oder H12MDI) wird zusätzlich noch eine gute Witterungsbeständigkeit erreicht.

Weiterhin hat das Verfahren gemäß der vorliegenden Erfindung die zusätzlichen Vorteile, dass während der Verfahrensschritte IV. und V. ein nur sehr geringer Schrumpf und eine geringe Schwindung auftreten und das Endprodukt eine gegenüber dem Stand der Technik vergleichbarer Systeme eine besonders gute Oberflächenqualität aufweist.

Möglich ist aber auch die Verwendung von speziellen Katalysatoren zur Reaktionsbeschleunigung der zweiten Aushärtung in Verfahrensschritt V z.B. quartäre Ammoniumsalze, vorzugsweise Carboxylate oder Hydroxide, besonders bevorzugt in Kombination mit Epoxiden oder Metallacetylacetonate, vorzugsweise in Kombination mit quartären Ammoniumhalogeniden. Diese Katalysatorsysteme können dafür sorgen dass die Härtungstemperatur für die zweite Aushärtung bis auf 100 °C zurückgeht, oder aber bei höheren Temperaturen geringere Härtungszeiten benötigt werden.

### Weitere Bestandteile der Composite-Halbzeuge

Zusätzlich zu der Harzkomponente, dem Trägermaterial und der Isocyanatkomponente können die Composite-Halbzeuge noch weitere Zusatzstoffe aufweisen. So können beispielsweise Lichtschutzmittel wie z.B. sterisch gehinderte Amine, oder andere Hilfsmittel, wie sie z. B. in EP 669 353 beschrieben wurden, in einer Gesamtmenge von 0,05 bis 5 Gew% zugesetzt werden. Füllstoffe und Pigmente wie z. B. Titandioxid können in einer Menge bis zu 30 Gew% der Gesamtzusammensetzung zugesetzt werden.
Für die Herstellung der erfindungsgemäßen reaktiven Polyurethanzusammensetzungen können darüber hinaus Zusatzstoffe wie Verlaufsmittel, z.B. Polysilicone oder Haftvermittler, z.B. auf Acrylatbasis, zugesetzt werden.

Gegenstand der Erfindung ist auch die Verwendung der Prepregs, bzw. Composite-Halbzeuge, insbesondere mit faserförmigen Trägern aus Glas-, Kohle- oder Aramid-Fasern. Gegenstand der Erfindung ist insbesondere auch die Verwendung der erfindungsgemäß hergestellten Composite-Halbzeuge zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z.B. für Rotorblätter bei Windkraftanlagen.

Neben dem erfindungsgemäßen Verfahren und der Verwendung des unmittelbaren Verfahrensproduktes sind auch spezielle Halbzeuge Bestandteil der vorliegenden Erfindung. Diese Halbzeuge zeichnen sich insbesondere dadurch aus einen faserförmigen Träger und ein Matrixmaterial aufzuweisen, wobei das Matrixmaterial aus einer ausgehärteten Harzkomponente und einer nicht reagierten Isocyanatkomponente in einem Verhältnis zwischen 90 zu 10 und 40 zu 60 zusammengesetzt ist. Insbesondere besteht diese Harzkomponente zu mindestens 30 Gew% aus einem ausgehärteten Reaktionsharz auf (Meth)acrylatbasis, und weist insgesamt eine OH-Zahl zwischen 10 und 600 mg KOH / g auf. Dabei beschreiben diese OH-Zahlen insbesondere Zusammensetzung, die zusätzlich Polyol-Komponenten enthalten. In Ausführungsformen, in denen ein reines (Meth)acrylatharz ohne zusätzliche Polyole eingesetzt wird, liegt die OH-Zahl in der Regel zwischen 10 und 200 mg KOH / g.
Ein Beispiel für ein solches Halbzeug kann unabhängig von der Polyol bezüglichen Ausführungsform beispielsweise aus dem Verfahrensschritt III des erfindungsgemäßen Verfahrens entnommen werden.

### Beispiele

Folgende Glasfasergelege bzw. -gewebe wurden in den Beispielen verwendet: Glasfilamentgewebe 296 g/m² - Atlas, Finish FK 144 (Interglas 92626)

### Herstellung des uretdionhaltigen Härters H:

119,1 g IPDI-Uretdion (Evonik Industries) wurden in 100 ml Methylmethacrylat gelöst und mit 27,5 g Propandiol und 3,5 g Trimethylolpropan versetzt. Nach Zugabe von 0,01 g Dibutylzinndilaurat wurde 4 h unter Rühren auf 80 °C erhitzt. Danach waren titrimetrisch keine freien NCO-Gruppen mehr zu detektieren. Der Härter H weist bezogen auf Feststoff einen effektiven NCO-Latentgehalt von 12,8 Gew% auf.
Es wurden für die Beispiele 1 und 2 zwei dieser Härter a) und b) nach identischem Vorgehen hergestellt.

### Reaktive Polyurethanzusammensetzung

Es wurden reaktive Polyurethanzusammensetzungen mit den folgenden Rezepturen zur Herstellung der Prepregs und der Composite verwendet.

### Beispiel 1

**Tabelle 1**

| | | |
|---|---|---|
| Härter H (60%ig in MMA) (NCO-effektiv: 7,7%) | uretdiongruppenhaltige Härterkomponente a) | 40 Gew% |
| 3-Hydroxypropylmethacrylat (HPMA) | OH-funktionelles Monomer der Harzkomponente | 11 Gew% |
| Methylmethacrylat (MMA) | Monomer der Harzkomponente | 47 Gew% |
| Dibenzoylperoxid | Initiator | 1 Gew% |
| N,N-bis-(2-Hydroxyethyl)-p-toluidin | Beschleuniger | 1 Gew% |

Zur Herstellung des Bauteils wurden 10 Lagen Glasfasergewebe in einem Metall-Werkzeug mit der Größe 25x25 cm übereinander gestapelt und diese mit Stickstoff gespült.
Die Einsatzstoffe aus der Tabelle wurden in einem Vormischer vermischt und anschließend gelöst. Diese Mischung kann etwa 15 min bei RT verwendet werden, bevor sie geliert.
Die Matrix wurde anschließend auf die Faser gegeben. Während des Schließvorgangs verteilte sich die Matrix in dem Werkzeug und benetzte die Verstärkungsfasern. Nach 20 min ist die Reaktion bei RT vollständig beendet und das Preform (hier gleichbedeutend mit Halbzeug) konnte dem Werkzeug entnommen werde. Das Preform des Beispiels 1 zeigte nach der Reaktion einen Gewichtsverlust bezogen auf Matrix von ca. 2 Gew%.
Das Preform wurde anschließend in einem weiteren Werkzeug 1 h bei 180 °C und 50 bar verpresst und dabei das Matrixmaterial vollständig vernetzt. Die harten, steifen, chemikalienbeständigen und schlagzähen Composite-Bauteile (Plattenware) wiesen eine Glasübergangstemperatur Tg von 118 °C auf.

### Beispiel 2

In Beispiel 2 wurde analog zu Beispiel 1 vorgegangen. Einzig wurde eine Harzkomponente, die zusätzlich nicht-(meth)acrylische Polyole enthielt, eingesetzt. Die Zusammensetzung ergibt sich aus Tabelle 2.
Die Durchführung des Beispiels 2 erfolgte gemäß Beispiel 1. Dabei wurde ein Gewichtsverlust des Preforms nach der Reaktion von 1 Gew% anstelle von 2 Gew% in Beispiel 1 gemessen. Die harten, steifen, chemikalienbeständigen und schlagzähen Composite-Bauteile (Plattenware) wiesen eine Glasübergangstemperatur Tg von 80 °C auf und waren insgesamt etwas flexibler als die Platten aus Beispiel 1.

**Tabelle 2**

| | | |
|---|---|---|
| Härter H (60%ig in MMA) (NCO-effektiv: 7,9%) | uretdiongruppenhaltige Härterkomponente b) | 54 Gew% |
| 3-Hydroxypropylmethacrylat (HPMA) | OH-funktionelles Monomer der Harzkomponente | 6 Gew% |
| Methylmethacrylat (MMA) | Monomer der Harzkomponente | 22 Gew% |
| Polyol R3215 | Polyol in Harzkomponente | 16 Gew% |
| Dibenzoylperoxid | Initiator | 1 Gew% |
| N,N-bis-(2-Hydroxyethyl)-p-toluidin | Beschleuniger | 1 Gew% |

## Patentansprüche

1. Verfahren zur Herstellung von Composite-Halbzeugen und deren Weiterverarbeitung zu Formteilen, folgende Verfahrensschritte aufweisend
I. Herstellung einer flüssigen, reaktiven Zusammensetzung,
II. direkte Imprägnierung eines faserförmigen Trägers mit der Zusammensetzung aus I.,
III. Polymerisation von Monomerbestandteilen in der flüssigen Zusammensetzung bei einer Temperatur T₁,
IV. Formgebung zum späteren Formteil in einer Presse und/oder einem anderen Werkzeug und
V. gleichzeitiges Aushärten der Isocyanatkomponente in der Zusammensetzung in dieser Presse bei einer Temperatur T₂,
wobei die Zusammensetzung im Wesentlichen aus folgenden Komponenten besteht:
A) einer reaktiven Harzkomponente auf (Meth)acrylatbasis, enthaltend mindestens ein (Meth)acylatmonomer und mindestens ein Poly(meth)acrylat, wobei mindestens ein Bestandteil der Harzkomponente Hydroxygruppen aufweist,
B) mindestens einem blockierten Di- oder Polyisocyanat und/oder mindestens einem Uretdion als Isocyanatkomponente,
und wobei die Temperatur T₂ mindestens 20 °C höher ist als die Temperatur T₁.

2. Verfahren nach Anspruch 1, **dadurch gekennzeichnet, dass** das Mengenverhältnis der Harzkomponente zur Isocyanatkomponente zwischen 90 zu 10 und 40 zu 60 liegt.

3. Verfahren gemäß einem der Ansprüche 1 oder 2, **dadurch gekennzeichnet, dass** die Temperatur T₁ in Verfahrensschritt III. zwischen 20 und 120 °C, bevorzugt zwischen 40 und 100 °C liegt, und dass die Temperatur T₂ in Verfahrensschritt V. zwischen 140 und 200 °C liegt.

4. Verfahren gemäß mindestens einem der Ansprüche 1 bis 3, **dadurch gekennzeichnet, dass** die Harzkomponente A) mindestens zusammengesetzt ist aus
20 Gew% bis 100 Gew% Monomere,
0 Gew% bis 70 Gew% Präpolymere.

5. Verfahren gemäß Anspruch 4, **dadurch gekennzeichnet, dass** die Harzkomponente A) mindestens zusammengesetzt ist aus
0 Gew% bis 10 Gew% Vernetzer,
30 Gew% bis 90 Gew% Monomere,
0 Gew% bis 20 Gew% Urethan(meth)acrylate,
0 Gew% bis 40 Gew% Präpolymere,
0 Gew% bis 10 Gew% eines oder mehrerer Initiatoren und
5 Gew% bis 50 Gew% eines oder mehrerer Polyole.

6. Verfahren gemäß mindestens einem der Ansprüche 1 bis 5, **dadurch gekennzeichnet, dass** es sich bei dem Initiator um Hydroxyketone und/oder Bisacylphosphine als Photoinitator und/oder um ein Peroxid als thermisch aktivierbarer Initiator und/oder um einen Redoxbeschleuniger handelt, und dass die Summe der Initiatoren in einer Konzentration zwischen 0,2 und 6,0 Gew% in der Zusammensetzung enthalten ist.

7. Verfahren gemäß mindestens einem der Ansprüche 1 bis 6, **dadurch gekennzeichnet, dass** die faserförmigen Träger größtenteils aus Glas, Kohlenstoff, Kunststoffen, wie Polyamid (Aramid) oder Polyester, Naturfasern, oder mineralischen Fasermaterialien wie Basaltfasern oder keramische Fasern bestehen, und dass die faserförmigen Träger als textile Flächengebilde aus Vlies, Maschenware, Gewirke oder Gestricke, nicht maschige Gebinde wie Gewebe, Gelege oder Geflechte, als Langfaser- oder Kurzfasermaterialien vorliegen.

8. Verfahren gemäß mindestens einem der Ansprüche 1 bis 7, **dadurch gekennzeichnet, dass** Di- oder Polyisocyanate der Komponente B), ausgewählt aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4- Trimethylhexamethylendiisocyanat/2,4,4- Trimethylhexamethylendiisocyanat (TMDI) und/oder Norbornandiisocyanat (NBDI), wobei auch die Isocyanurate einsetzbar sind, als Isocyanatkomponente eingesetzt werden, und dass diese Di- oder Polyisocyanate mit einem externen Blockierungsmittel, ausgewählt aus Acetessigsäureethylester, Diisopropylamin, Methylethylketoxim, Malonsäurediethylester, ε-Caprolactam, 1,2,4-Triazol, Phenol oder substituierte Phenole und/oder 3,5-Dimethylpyrazol, blockiert sind.

9. Verfahren gemäß mindestens einem der Ansprüche 1 bis 8, **dadurch gekennzeichnet, dass** die Isocyanatkomponente zusätzlich 0,01 bis 5,0 Gew% Katalysatoren enthält, bevorzugt Dibutylzinndilaurat, Zinkoctoat, Bismuthneodecanoat, und/oder tertiäre Amine, bevorzugt 1,4-Diazabicylco[2.2.2.]octan, in Mengen von 0,001 bis 1,0 Gew%.

10. Verfahren gemäß mindestens einem der Ansprüche 1 bis 7, **dadurch gekennzeichnet, dass** als Isocyanatkomponente Uretdione hergestellt aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), eingesetzt werden.

11. Verfahren gemäß Anspruch 10, **dadurch gekennzeichnet, dass** die Isocyanatkomponente unterhalb von 40 °C als Reinstoff in fester Form und oberhalb von 125 °C in flüssiger Form vorliegt, einen freien NCO-Gehalt von kleiner 5 Gew% und einen Uretdiongehalt von 3 bis 60 Gew% aufweist, und dass die Isocyanatkomponente zusätzlich 0,01 bis 5 Gew% mindestens eines Katalysators ausgewählt aus quarternären Ammoniumsalzen und/oder quarternären Phosphoniumsalzen mit Halogenen, Hydroxiden, Alkoholaten oder organischen oder anorganischen Säureanionen als Gegenion enthält.

12. Verfahren gemäß einem der Ansprüche 10 oder 11, **dadurch gekennzeichnet, dass** die Isocyanatkomponente zusätzlich 0,1 bis 5 Gew% mindestens einen Co-Katalysators, ausgewählt aus entweder mindestens einem Epoxid und/oder mindestens einem Metallacetylacetonat und/oder quarternären Ammoniumacetylacetonat und/oder quarternären Phosphoniumacetylacetonat, und gegebenenfalls aus der Polyurethanchemie bekannte Hilfs- und Zusatzstoffe enthält.

13. Verfahren gemäß mindestens einem der Ansprüche 1 bis 12, **dadurch gekennzeichnet, dass** die Harzkomponente und die Isocyanatkomponente in einem solchen Verhältnis zueinander vorliegen, dass auf jede Hydroxylgruppe der Harzkomponente 0,3 bis 1,0, bevorzugt 0,4 bis 0,8, besonders bevorzugt 0,45 bis 0,65 Uretdiongruppen entfallen.

14. Verfahren gemäß Anspruch 5, **dadurch gekennzeichnet, dass** die Harzkomponente 10 Gew% bis 30 Gew% des zusätzlichen Polyols enthält, und dass es sich bei dem Polyol um eine niedermolekulares Polyol mit 3 bis 6 OH-Funktionalitäten, um einen Polyester mit einem Molekulargewicht Mₙ zwischen 200 und 4000 g/mol, einer OH-Zahl zwischen 25 und 800 mg KOH/g und einer Säurezahl kleiner 2 mg KOH / g, einen Polyether mit einer OH-Zahl zwischen 25 und 1200 mg KOH / g und einer molaren Masse Mₙ zwischen 100 und 2000 g/mol oder um eine Mischung mindestens zweier dieser Polyole handelt.

15. Verfahren gemäß Anspruch 14, **dadurch gekennzeichnet, dass** es sich bei dem Polyester um ein Polycaprolacton mit einer OH-Zahl zwischen 25 und 540, einer Säurezahl zwischen 0,5 und 1 mg KOH / g und einer molaren Masse zwischen 240 und 2500 g/mol handelt.

16. Verwendung von mittels dem Verfahren gemäß mindestens einem der Ansprüche 1 bis 15 hergestellten Formteilen im Boots- und Schiffbau, in der Luft- und Raumfahrtechnik, im Automobilbau, für Zweiräder bevorzugt Motorräder und Fahrräder, in den Bereichen Automotive, Construction, Medizintechnik, Sport, Elektro- und Elektronik-Industrie, Energieerzeugungsanlagen, wie für Rotorblätter bei Windkraftanlagen.

17. Halbzeug, einen faserförmigen Träger und ein Matrixmaterial aufweisend, wobei das Matrixmaterial aus einer ausgehärteten Harzkomponente und einer nicht reagierten Isocyanatkomponente in einem Verhältnis zwischen 90 zu 10 und 40 zu 60 zusammengesetzt ist, **dadurch gekennzeichnet, dass** die Harzkomponente zu mindestens 30 Gew% aus einem ausgehärteten Reaktionsharz auf (Meth)acrylatbasis besteht, und dass die Harzkomponente eine OH-Zahl zwischen 10 und 600 mg KOH / g aufweist.
